# EUROPÄISCHE PATENTANMELDUNG

(11) **EP 0 897 089 A2**
(43) Veröffentlichungstag der Anmeldung: **17.02.1999**
(21) Anmeldenummer: 98115340.6
(22) Anmeldetag: 14.08.1998
(51) Int. Cl.: F24D 3/14

(54) **Haltegitter zum Halten eines Rohres für eine Flächenheizung oder Flächen-kühlung mit gebogenen und geradlinigen Abschnitten**

(30) Priorität: 14.08.1997 DE 19735258
(71) Anmelder: Hewing GmbH, D-48607 Ochtrup (DE)
(72) Erfinder: Riesselmann, Franz-Josef, Dipl.-Ing., 49393 Lohne (DE)
(74) Vertreter: Hilleringmann, Jochen, Dipl.-Ing.

(57) **Zusammenfassung**

Das Haltegitter zum Halten eines Rohres für eine Flächenheizung oder Flächenkühlung mit gebogenen und geradlinigen Abschnitten besteht aus mehreren jeweils zueinander parallelen Fixierstäben (14) mit Halteelementen (24) zum Halten des Rohres (32) und mehreren die Fixierstäbe (14) kreuzenden Abstandsstäben (18), die zwischen jeweils benachbarten Fixierstäben (14) verlaufen und mit diesen verbunden und/oder verbindbar sind.

## Beschreibung

Die Erfindung betrifft ein Haltegitter zum Halten eines Rohres für eine Flächenheizung oder Flächenkühlung, wobei das vom Haltegitter gehaltene Rohr gebogene und geradlinige Abschnitte aufweist.

Bei der Installation von wärme- bzw. kälteabgebenden Flächen, wie beispielsweise Kühldecken oder Wandheizungen, ist es erforderlich, ein das Wärme- bzw. Kältemedium führendes Rohr mittels Halteelementen an einer Fläche anzubringen. Im Falle einer Fußbodenheizung sind die Halteelemente in einem vorgegebenen Muster auf einer Folie angeordnet, die auf einem Wärmedämmungsuntergrund aufkaschiert ist oder auf diesen aufgelegt wird. Aufwendig wird die Anordnung der Halteelemente dann, wenn es gilt, auf der zu installierenden Fläche Bereiche auszusparen, in denen keine Rohre verlegt werden sollen bzw. müssen, da sich in diesen Bereichen beispielsweise "Hindernisse" beliebiger Art befinden.

Der Erfindung liegt die Aufgabe zugrunde, eine vorgefertigte Halterung für die Rohre von Flächenheizungen bzw. Flächenkühlungen zu schaffen, die sich durch ein hohes Maß an Flexibilität bei der Installation auszeichnet.

Zur Lösung dieser Aufgabe wird mit der Erfindung ein Haltegitter zum Halten eines Rohres, insbesondere für eine Flächenheizung bzw. Flächenkühlung mit gebogenen und geradlinigen Abschnitten vorgeschlagen, wobei das Haltegitter versehen ist mit
- mehreren jeweils zueinander parallelen Fixierstäben mit Halteelementen zum Halten des Rohres und
- mehreren die Fixierstäbe kreuzenden Abstandsstäben, die zwischen jeweils benachbarten Fixierstäben verlaufen und mit diesen verbunden und/oder verbindbar sind.

Bei der Erfindung handelt es sich um ein Haltegitter, das mehrere jeweils zueinander parallele Fixierstäbe aufweist, an denen bzw. zwischen denen Halteelemente zum Halten des Rohres angeordnet sind. Die Fixierstäbe sind durch diese kreuzenden Abstandsstäbe auf Abstand zueinander gehalten, wobei die Abstandsstäbe jeweils zwischen benachbarten Fixierstäben verlaufen und mit diesen insbesondere lösbar verbunden sind.

Der Vorzug des erfindungsgemäßen Haltegitters besteht insbesondere in seiner einfachen Handhabung. Das Haltegitter ist flexibel und damit in seiner Form veränderbar, was insbesondere dadurch realisiert wird, daß die Verbindung der Abstandsstäbe mit den Fixierstäben gelöst und unter Veränderung der Ausrichtung der Abstandsstäbe sowie der Fixierstäbe wieder miteinander verbunden werden können. Insbesondere ist es möglich, die Abstandsstäbe zu kürzen, um den Abstand benachbarter Fixierstäbe zu verringern. Hierdurch läßt sich beim Verlegen der Haltegitter Hindernissen auf der zu installierenden Fläche ausweichen, indem die "regelmäßige" Haltegitterstruktur in den an diese Bereiche angrenzenden Regionen verändert wird, was auf einfache Weise beim Verlegen vor Ort geschieht.

Insbesondere ist es zweckmäßig, das Haltegitter direkt mit einem gebogenen Rohrstück zu versehen. Bei diesem Rohr handelt es sich um ein Kunststoffrohr oder um ein Kunststoff-Metall-Verbundrohr. Beide Rohre lassen sich relativ problemlos verbiegen, so daß bei einer Veränderung eines mit einem Rohr bestückten Haltegitters das Rohr der veränderten Anordnung der Halteelemente des Haltegitters problemlos folgt.

In vorteilhafter Weiterbildung der Erfindung ist insbesondere vorgesehen, daß die Abstandsstäbe zumindest mit einigen der Fixierstäbe gelenkig verbunden und/oder verbindbar sind, wobei die Verbindung der Abstandsstäbe mit den Fixierstäben vorzugsweise lösbar ist. Durch die gelenkige Verbindung der Abstandsstäbe mit den Fixierstäben lassen sich deren relative Ausrichtungen problemlos verändern. Die Veränderbarkeit der Struktur des Haltegitters ist noch vielfältiger, wenn mehrere Fixierstäbe jeweils gelenkig miteinander verbunden, wobei mehrere derartige Gruppen von Fixierstäben nebeneinander angeordnet und durch die Abstandsstäbe voneinander beabstandet sind.

Wie bereits oben ausgeführt, können sich die Halteelemente, bei denen es sich insbesondere um Halteclipse handelt, in die das Rohr hineingedrückt wird, an den Fixierstäben selbst oder an separaten Elementen zwischen den Fixierstäben bzw. den Abstandsstäben befinden. Im letzterem Fall ist es von Vorteil, wenn die Halteelemente sozusagen als Knotenelemente zum Verbinden von Fixierstäben und/oder Abstandsstäben ausgebildet sind. Die Knotenelemente sind also die Verbindungsstellen des Haltegitters, an denen entweder 2 Fixierstäbe, 2 Abstandsstäbe oder Fixierstäbe und Abstandsstäbe miteinander verbunden sind.

Vorzugsweise ist jedes Knotenelement mit einer Basisplatte versehen, an der der Halteclips in Form insbesondere zweier abstehender Haltevorsprünge zum klemmenden Halten des Rohres ausgebildet ist. Ferner trägt die Basisplatte Rastverbindungsvorsprünge zum rastenden Verbinden mit den Fixierstäben und/oder den Abstandsstäben. Diese weisen zweckmäßigerweise an ihren Enden Rastlöcher zum Aufstecken auf die Rastverbindungsvorsprünge der Knotenelemente auf. Sofern die Stäbe jeweils mit lediglich einem Rastverbindungsvorsprung eines Knotenelements verbunden sind, sind sie gelenkig mit diesem Knotenelement verbunden. Zur Herstellung einer wahlweise starren Verbindung der Stäbe mit den Knotenelementen ist es von Vorteil, wenn die Stäbe mit mindestens 2 Rastverbindungsvorsprüngen der Knotenelemente verbunden sind. Hierzu wiederum ist es erforderlich, daß die Abstandsstäbe bzw. Fixierstäbe an ihren Enden 2 Rastlöcher zum Aufnehmen von 2 Rastverbindungsvorsprüngen eines Knotenelements aufweisen. Jedes Knotenelement weist insoweit vorzugsweise 4 Rastverbindungsvorsprünge auf, von denen jeweils 2 entlang einer gemeinsamen geraden Linie voneinander beabstandet angeordnet sind, wobei diese beiden gedachten Verbindungslinien sich kreuzen und insbesondere rechtwinklig zueinander verlaufen. Durch diese Anordnung der Rastvorsprünge lassen sich an einem Knotenelement sämtliche mit diesem verbundene Fixier- und Abstandsstäbe starr ankoppeln, so daß ein insoweit starres Haltegitter aufgebaut werden kann, bei dem die Verdrehung der Stäbe relativ zu den Knotenelementen nicht möglich ist. Allerdings können durch Aufheben dieser starren Verbindung und durch Aufstecken der Stäbe auf lediglich einen Rastverbindungsvorsprung in das Haltegitter wahlweise gelenkige Verbindungen der Stäbe mit den zugehörigen Knotenelementen realisiert werden, so daß auf diese Weise eine bereichsweise hohe Flexibilität bei der Anpassung des Haltegitters an die zu installierende Fläche und deren Gestalt möglich ist.

In vorteilhafter Weiterbildung der Erfindung ist ferner vorgesehen, daß die Stäbe nicht nur in ihren Endbereichen Rastlöcher aufweisen, sondern daß derartige Rastlöcher vorzugsweise über die gesamte Länge der Stäbe ausgebildet sind. Hierdurch läßt sich das Haltegitter in beliebiger Weise verändern, da die "effektive Länge" der Stäbe zwischen benachbarten Knotenelementen wahlweise nahezu beliebig geändert werden kann.

Wie bereits oben erwähnt, besteht die Alternative in der Veränderung der Abstände benachbarter Knotenelemente darin, die betreffenden Stäbe zu kürzen. Hierzu ist es zweckmäßig, wenn die Stäbe Sollbruchstellen aufweisen, an denen sich die Stäbe auf einfache Weise durchtrennen und damit kürzen lassen. Dies ist, wie gesagt, eine alternative Ausgestaltung zu der zuvor beschriebenen Weiterbildung der Erfindung, bei der die Stäbe mit mehreren Verbindungslöchern zum Verbinden mit den Knotenelementen ausgestattet sind.

Als Material für die Stäbe kommt insbesondere Metall, aber auch Kunststoff in Frage. Metall hat den Vorteil der plastischen Verformbarkeit, womit die Möglichkeit gegeben ist, das Haltegitter noch einfacher und vielfältiger an die jeweils vorhandenen Verlegungsgegebenheiten der zu installierenden Fläche anzupassen. Mit Kunststoff ist eine plastische Verformung nur bedingt zu realisieren. Allerdings hat Kunststoff den Vorteil, daß sich die Stäbe verformen lassen, um das Haltegitter dann bei krummlinigem Verlauf der bzw. einiger der Stäbe an der Fläche zu befestigen.

Nachfolgend wird anhand der Figuren ein Ausführungsbeispiel der Erfindung näher erläutert. Im einzelnen zeigen:
- Fig. 1: eine Draufsicht auf ein Haltegitter gemäß einer bevorzugten Ausführungsform der Erfindung,
- Fig. 2: eine vergrößerte Darstellung eines Abstandsstabes,
- Fig. 3: einen Schnitt entlang der Linie III-III der Fig. 1 durch ein Knotenelement,
- Fig. 4: eine Draufsicht auf ein Knotenelement des Haltegitters gemäß Fig. 1 in vergrößertem Maßstab,
- Fig. 5: eine Darstellung ähnlich der gemäß Fig. 1, jedoch mit auf dem Haltegitter angeordnetem und schlangenlinienförmig verlaufendem Rohr und
- Fig. 6: ein Beispiel für eine Veränderung der Haltegitterstruktur zum Verlegen des von diesem gehaltenen Rohres um ein "Hindernis" herum.

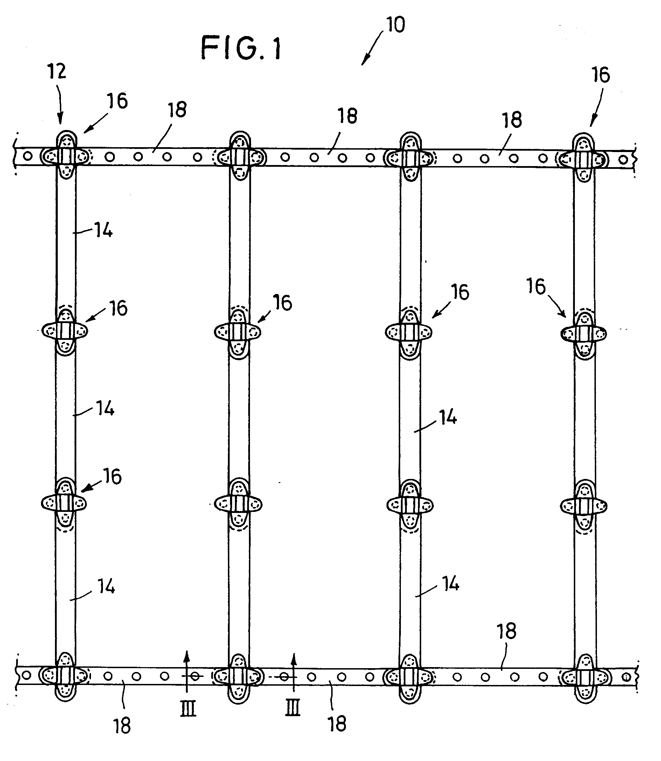

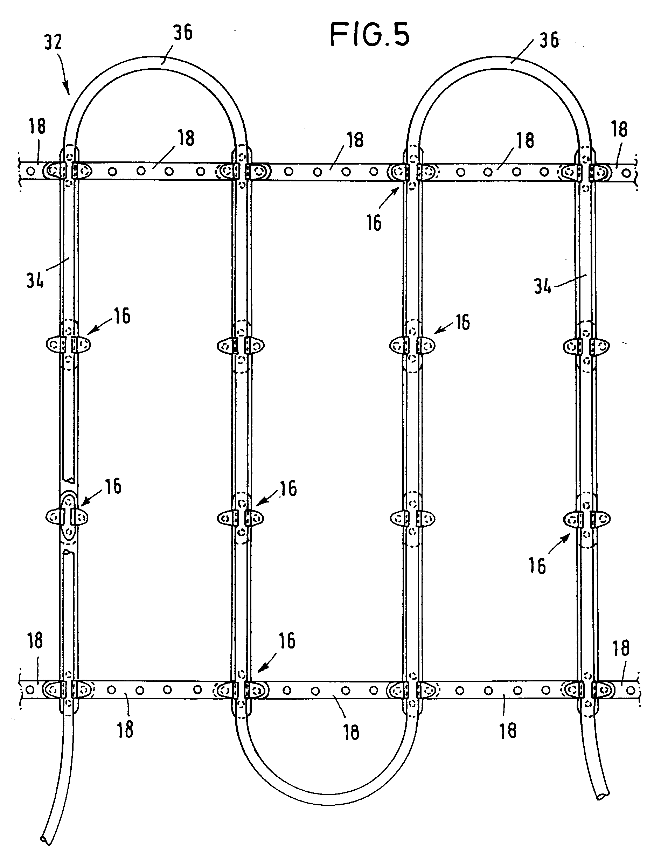

In Fig. 1 ist eine Draufsicht auf einen Ausschnitt eines Endlos-Haltegitters 10 gezeigt. Das Haltegitter 10 weist mehrere Gruppen 12 von mehreren (in diesem Fall 3) Fixierstäben 14 auf, die in axialer Verlängerung zueinander angeordnet sind. Die Fixierstäbe sind an ihren Enden mit Knotenelementen 16 verbunden, wobei die außenliegenden Fixierstäbe 14 einer jeden Gruppe 12 an ihren freien Enden ebenfalls ein Knotenelement 16 aufweisen. Diese Knotenelemente 16 an den freien Enden der außenliegenden Fixierstäbe 14 sind durch Abstandsstäbe 18 miteinander verbunden. Auf diese Weise ergibt sich die in Fig. 1 gezeigte regelmäßige Gitterstruktur, bei der am oberen und am unteren Ende in jeweiliger axialer Ausrichtung zueinander angeordnete Abstandsstäbe 18 mit quer zwischen diesen verlaufenden Fixierstäben 14 angeordnet sind. Ein derartiges Haltegitterband kann aufgerollt werden, und zwar auch dann, wenn an dem Haltegitterband ein schlangenlinienförmig gebogenes Rohr angeclipst ist. Hierauf wird noch im Zusammenhang mit der Fig. 5 eingegangen werden.

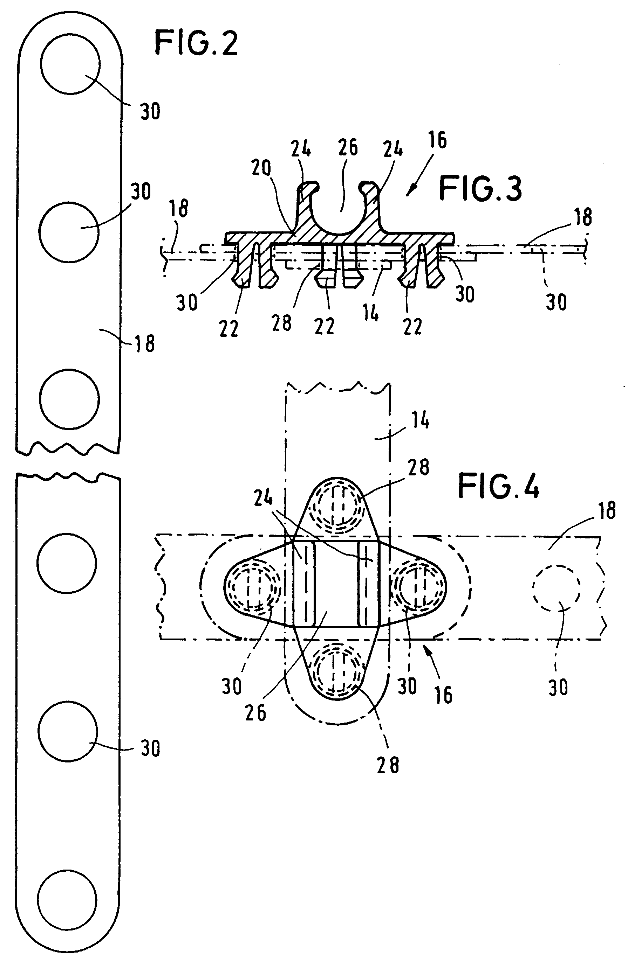

Die Verbindung der Stäbe 14 und 18 mit den Knotenelementen 16 ist in der Situation gemäß Fig. 1 starr. Andererseits ist die Verbindung der Stäbe 14,18 mit den Knotenelementen 16 derart ausgebildet, daß sich die Stäbe 14,18 auf einfache Weise von den Knotenelementen 16 lösen lassen. Zu diesem Zweck ist jedes Knotenelement 16 gemäß Fig. 3 mit einer Basisplatte 20 versehen, von deren Unterseite 4 Rastknöpfe 22 abstehen, die jeweils paarweise einander gegenüberliegend angeordnet sind, wobei die beiden Paare um 90° gegeneinander verdreht sind (siehe auch Fig. 4). Auf der Oberseite der Basisplatte 20 befinden sich einander gegenüberliegende Haltevorsprünge 24, die zwischen sich eine Aufnahme 26 für ein Rohr bilden. An den Enden weisen die Stäbe 14 und 18 jeweils 2 Rastlöcher 28 bzw. 30 auf, wobei der Abstand dieser beiden Rastlöcher 28,30 gleich dem Abstand einander gegenüberliegender Rastknöpfe 22 ist. Während die Fixierstäbe 14 lediglich an ihren Enden jeweils 2 Rastlöcher 28 aufweisen, sind die Abstandsstäbe 18 über ihre gesamte Erstreckung mit Rastlöchern 30 versehen, was auch in Fig. 2 dargestellt ist.

Durch Aufstecken der Fixier- und Abstandsstäbe 14 bzw. 18 an den Knotenelementen 16, indem sich jeweils 2 Rastknöpfe 22 durch jeweils 2 Rastlöcher 28 bzw. 30 der Stäbe 14 bzw. 18 erstrecken, ist eine gelenkfreie Verbindung der Stäbe 14 und 18 mit den Knotenelementen 16 möglich. Andererseits läßt sich diese starre Verbindung auf einfache Weise aufheben, indem die Stäbe 14 bzw. 18 wahlweise von einem Knotenelement 16 gelöst werden, um dann lediglich mit einem ihrer Rastlöcher 28 bzw. 30 auf lediglich einen Rastknopf 22 aufgesteckt zu werden. Hierdurch ist es dann möglich, die Verbindung der Fixierstäbe 14 bzw. der Abstandsstäbe 18 mit den Knotenelementen 16 gezielt gelenkig auszubilden. Ferner ist es möglich, einzelne Fixierstäbe 14 bzw. Abstandsstäbe 18 aus der Struktur des Gitters 10 herauszutrennen, sofern dies die mit dem Haltegitter zu versehene Fläche erfordert.

In Fig. 5 ist der Fall gezeigt, daß das Haltegitter 10 gemäß Fig. 1 mit einem schlangenlinienförmig verlaufenden Rohr 32 bestückt ist. Das Rohr 32 besteht aus Kunststoff, insbesondere vernetztem Polyethylen, und weist geradlinige Abschnitte 34 und um jeweils 180° gebogene Abschnitte 36 auf. Während die geradlinigen Abschnitte 34 parallel zu den Fixierstäben 14 verlaufen, stehen die gebogenen Abschnitte 36 über die einander abgewandten Seiten der oberen und unteren Abstandsstäbe 18 und damit über die oberen und unteren Begrenzungsränder des Haltegitters 10 über. Das Rohr 32 ist in die Rohraufnahmen 26 der Knotenelemente 16 eingeschoben und wird durch die um mehr als 180° geschlossenen Haltevorsprünge 24 gegen ein unbeabsichtigtes Herausrutschen aus den Rohraufnahmen 26 gehalten. Ein Endlos-Haltegitter 10, das mit einem endlos schlangenlinienförmig verlaufenden Rohr 32 gemäß Fig. 5 bestückt ist, läßt sich aufwickeln und in dieser Form zur Baustelle transportieren, wo es vor Ort abgewickelt und ggf. auf Länge zugeschnitten wird.

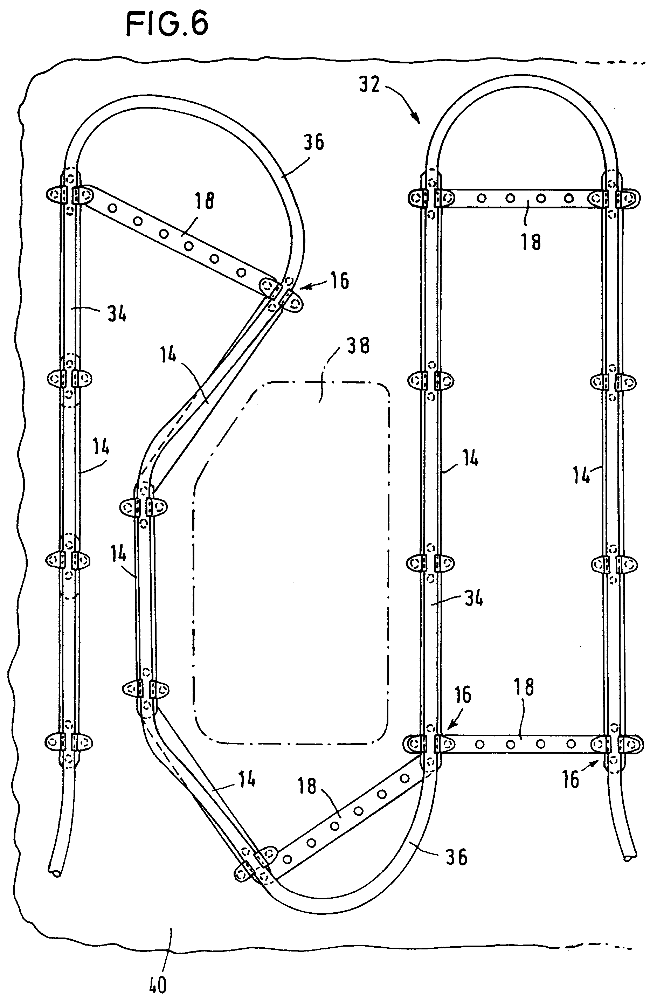

Die Flexibilität bei der Verlegung eines derartigen Rohrmoduls ist in Fig. 6 gezeigt. Aufgrund eines in Fig. 6 bei 38 angedeuteten Bereichs der mit dem Rohr 32 zu versehenen Fläche 40 ist es erforderlich, von dem regelmäßigen schlangenlinienförmigen Verlauf des Rohres 32 bereichsweise abzuweichen. Dies kann auf denkbar einfache Weise durch das Haltegitter 10 erreicht werden, indem zwei oder mehrere aufeinanderfolgende Gruppen von Fixierstäben 14 miteinander verbindende Abstandsstäbe 18 herausgetrennt werden. Die beiden herauszutrennenden Abstandsstäbe 18 befinden sich an den einander gegenüberliegenden Enden einer Fixierstabgruppe 12 und erstrecken sich zu unterschiedlichen Seiten von dieser. Auf diese Weise entstehen drei aufeinanderfolgende Gruppen 12 von Fixierstäben 14, die jeweils durch lediglich einen Abstandsstab 18 verbunden sind, wobei diese beiden Abstandsstäbe 18 an wechselseitigen Enden, nämlich am oberen und am unteren Ende des Haltegitters 10 angeordnet sind. Der Bereich 38 der Fläche 40 macht es überdies erforderlich, daß die Fixierstäbe 14 und die Abstandsstäbe 18 in diesem Bereich von ihrer ursprünglich rechtwinklig zueinander verlaufenden Ausrichtung abweichen. Dies wird dadurch realisiert, daß wahlweise die starren Verbindungen der Stäbe 14 bzw. 18 mit den Knotenelementen 16 aufgehoben werden, um diese Stäbe 14 bzw. 18 dann gelenkig mit den Knotenelementen 16 zu verbinden. Die Wahl der Verbindungen von Knotenelementen 16 und Stäben 14 bzw. 18, die als gelenkige Verbindungen ausgeführt sein sollten, damit das Rohr 32 um den Bereich 38 herumgeführt werden kann, hängen von dem Ausmaß des Bereichs 38 und dessen Form ab. Da sämtliche Fixierstäbe 14 innerhalb jeder Gruppe 12 und die Abstandsstäbe 18 mit den Knotenelementen 16 wahlweise starr oder gelenkig verbunden werden können, ergibt sich ein hohes Maß an Flexibilität, was den Verlauf des zu verlegenden Rohres 32 und insbesondere was die Abweichung des Rohrverlaufs 32 von der regelmäßigen Schlangenlinienform gemäß Fig. 5 betrifft.

## Patentansprüche

1. Haltegitter zum Halten eines Rohres für eine Flächenheizung oder Flächenkühlung mit gebogenen und geradlinigen Abschnitten, mit
- mehreren jeweils zueinander parallelen Fixierstäben (14) mit Halteelementen (24) zum Halten des Rohres (32) und
- mehreren die Fixierstäbe (14) kreuzenden Abstandsstäben (18), die zwischen jeweils benachbarten Fixierstäben (14) verlaufen und mit diesen verbunden und/oder verbindbar sind.

2. Haltegitter nach Anspruch 1, dadurch gekennzeichnet, daß die Abstandsstäbe (18) zumindest mit einigen der Fixierstäbe (14) gelenkig verbunden und/oder verbindbar sind.

3. Haltegitter nach Anspruch 1 oder 2, dadurch gekennzeichnet, daß die Abstandsstäbe (18) zumindest mit einigen der Fixierstäbe (14) lösbar verbunden sind.

4. Haltegitter nach einem der Ansprüche 1 bis 3, dadurch gekennzeichnet, daß mehrere Fixierstäbe (14) gelenkig miteinander verbunden und/oder verbindbar sind.

5. Haltegitter nach einem der Ansprüche 1 bis 4, dadurch gekennzeichnet, daß die Halteelemente (24) als Knotenelemente (16) ausgebildet sind, mit denen Fixierstäbe (14) und/oder Abstandsstäbe (18) verbunden sind.

6. Haltegitter nach Anspruch 5, dadurch gekennzeichnet, daß jedes Knotenelement (16) eine Basisplatte (20) mit von dieser abstehenden Halteelementen (24) zum klemmenden Halten des Rohres (32) und Rastverbindungsvorsprüngen (22) zum rastenden Verbinden mit den Fixierstäben (14) und/oder den Abstandsstäben (18) aufweist.

7. Haltegitter nach Anspruch 6, dadurch gekennzeichnet, daß die Fixierstäbe (14) und/oder die Abstandsstäbe (18) zumindest an ihren Enden Rastlöcher (28;30) zum Aufstecken auf die Rastverbindungsvorsprünge (22) der Knotenelemente (16) aufweisen.

8. Haltegitter nach Anspruch 6 oder 7, dadurch gekennzeichnet, daß die Basisplatte (20) 2 Paare von entlang einer geraden Ausrichtlinie angeordneten und voneinander beabstandeten Rastverbindungsvorsprünge (22) aufweist, wobei die Ausrichtlinien der beiden Paare von Rastverbindungsvorsprüngen (22) quer zueinander verlaufen.

9. Haltegitter nach Anspruch 8, dadurch gekennzeichnet, daß der Abstand der Rastverbindungsvorsprünge (22) untereinander für jedes Paar gleich ist.

10. Haltegitter nach Anspruch 7 und 8 oder 9, dadurch gekennzeichnet, daß die Fixierstäbe (14) und/oder die Abstandsstäbe (18) an ihren Enden jeweils 2 Rastlöcher (28;30) aufweisen, deren Abstände gleich den Abständen der Rastverbindungsvorsprünge (22) eines Paars des Knotenelements (16) sind.

11. Haltegitter nach einem der Ansprüche 7 bis 10, dadurch gekennzeichnet, daß die Fixierstäbe (14) und/oder die Abstandsstäbe (18) mehrere Rastlöcher (28;30) aufweisen, die zumindest entlang von Teillängsabschnitten der Stäbe (14;18) gleichmäßig aufeinander folgend angeordnet sind.

12. Haltegitter nach einem der Ansprüche 1 bis 11, dadurch gekennzeichnet, daß die Fixierstäbe (14) und/oder die Abstandsstäbe (18) Sollbruchstellen zum Kürzen ihrer Längen aufweisen.

13. Haltegitter nach einem der Ansprüche 1 bis 12, dadurch gekennzeichnet, daß die Stäbe (14,18), die Halteelemente (24) und, sofern vorhanden, die Knotenelemente (16) aus Kunststoff oder Metall bestehen.

14. Haltegitter nach Anspruch 5 oder einem auf Anspruch 5 rückbezogenen Anspruch, dadurch gekennzeichnet, daß mehrere Gruppen (12) aus jeweils mindestens 2 in Verlängerung zueinander angeordneten und miteinander durch Knotenelemente (16) verbundenen Fixierstäben (14) vorgesehen sind und daß die jeweils außenliegenden Fixierstäbe (14) benachbarter Gruppen (12) mit Knotenelementen (16) verbunden sind, mit denen wiederum jeweils ein Abstandsstab (18) verbunden ist.

15. Flexibles Rohrverlegeelement mit einem Haltegitter (10) nach einem der vorhergehenden Ansprüche und einem an den Halteelementen (24) des Haltegitters (10) gehaltenen Rohr (32) mit geradlinigen Abschnitten (34) und gebogenen Abschnitten (36).

16. Rohrverlegeelement nach Anspruch 15, dadurch gekennzeichnet, daß das Haltegitter (10) gemäß Anspruch 14 ausgebildet ist und daß das Rohr (32) schlangenlinienförmig verläuft, wobei seine geradlinigen Abschnitte (34) jeweils entlang der Fixierstäbe (14) verlaufen sowie an den Knotenelementen (16) gehalten sind und seine gebogenen Abschnitte (36) über die Abstandsstäbe (18) überstehen.
